# DEMANDE DE BREVET EUROPEEN

(11) **EP 1 197 382 A1**
(43) Date de publication de la demande: **17.04.2002**
(21) Numéro de dépôt: 01402640.5
(22) Date de dépôt: 12.10.2001
(51) Int. Cl.: B60N 2/46, B60R 7/04, B60N 2/06

(54) **Console coulissante sur rails, notamment pour automobile**

(30) Priorité: 12.10.2000 FR 0013079
(71) Demandeur: Renault, 92100 Boulogne Billancourt (FR)
(72) Inventeur: Gallinato-Contino, Roland, 83780 Flayosc (FR)

(57) **Abrégé**

Cette console (1) coulissant sur un rail (13) comporte un organe de blocage (16) de la translation de la console (1) sur le rail (13), manoeuvrable par un organe (6, 6') de commande de blocage entre une position verrouillée dans laquelle la translation est bloquée et l'extraction de la console est impossible et une position déverrouillée dans laquelle la translation est possible. Elle comporte aussi un organe d'attachement (16) de la console au rail (13), manoeuvrable par un organe (4) de commande d'attachement, différent de l'organe (6, 6') de commande de blocage, entre une position verrouillée d'attachement dans laquelle la console (1) est attachée au rail mais non bloquée en translation et une position déverrouillée de détachement dans laquelle la console (1) est libérée du rail et son extraction est possible. Les organes (16) sont des sabots pivotants.

## Description

La présente invention concerne une console coulissante, notamment une console de véhicule automobile située entre deux sièges, par exemple entre le siège conducteur et le siège passager. Il est connu de monter la console coulissante sur des rails montés sur le plancher du véhicule, de façon qu'elle soit accessible depuis les places avant et les places arrière du véhicule.

De tels exemples de consoles sont décrits dans les documents JP 91109778 et DE 19742408.

Dans ces exemples, le système de fixation de la console sur les rails est un simple système de blocage en position de la console. Ce système inclut généralement une poignée reliée, par un système de câbles et de pivots, à un organe de verrouillage, ledit organe de verrouillage coopérant avec les rails pour bloquer la console lorsque la poignée est relâchée et libérer la console en translation par rapport aux rails, par action sur la poignée.

Il peut s'avérer utile de pouvoir retirer complètement la console des rails, de façon à l'enlever du véhicule. Dans les exemples précédents, il n'y a pas de moyens spécifiques pour l'extraction de la console des rails. Selon DE 19742408, cette extraction est impossible : la console est montée une fois pour toutes sur les rails et ne peut être complètement désolidarisée de ceux-ci, ce qui n'est pas optimum pour le confort des utilisateurs du véhicule. Selon JP 9109778 au contraire, dès que l'organe de verrouillage est actionné par la poignée, la console peut non seulement coulisser par rapport aux rails, mais aussi éventuellement être retirée, cette situation pouvant être incompatible avec les normes de sécurité.

Le but de l'invention est de proposer une console coulissante ne présentant pas ces inconvénients.

Le but de l'invention est atteint grâce à une console coulissant sur au moins un rail et comportant un organe de blocage de la translation de la console sur le rail, manoeuvrable par un organe de commande de blocage entre une position verrouillée dans laquelle la translation est bloquée et l'extraction de la console est impossible et une position déverrouillée dans laquelle la translation est possible, caractérisée en ce qu'elle comporte aussi un organe d'attachement de la console au rail, manoeuvrable par un organe de commande d'attachement, différent de l'organe de commande de blocage, entre une position verrouillée d'attachement dans laquelle la console est attachée au rail mais non bloquée en translation et une position déverrouillée de détachement dans laquelle la console est libérée du rail et son extraction est possible.

Avantageusement, l'organe de commande de blocage est double et est situé à l'avant et à l'arrière de la console pour en faciliter l'accès depuis les places avant ou arrière.

Avantageusement, l'organe de commande d'attachement est sur le dessus de la console et réalisé sous forme d'une poignée pivotante de soulèvement de la console.

Avantageusement les organes de blocage et d'attachement sont au moins en partie communs et/ou comportent une partie de chaîne cinématique commune.

Avantageusement, les organes de blocage et d'attachement sont constitués par des sabots pivotants à crochets susceptibles de prendre une position dans laquelle ils s'engagent complètement dans le rail, pour réaliser le blocage, une autre position dans laquelle ils s'engagent partiellement dans le rail pour permettre le coulissement de la console sans en permettre l'extraction et une troisième position dans laquelle ils ne sont pas engagés dans le rail pour permettre l'extraction de la console.

Avantageusement, les sabots sont portés par au moins un axe longitudinal pivotant sur lequel sont montés un levier de petit pivotement et un levier de grand pivotement reliés respectivement par une première et une seconde chaîne cinématique à l'organe de commande de blocage et à l'organe de commande d'attachement. La seconde chaîne cinématique comprend des moyens, avantageusement élastiques, permettant à la première chaîne cinématique de jouer malgré l'immobilité d'une partie de la seconde chaîne cinématique.

L'invention sera mieux comprise et d'autres caractéristiques et avantages de l'invention seront mis en évidence à l'aide de la description qui suit, en référence aux dessins schématiques annexés représentant un mode de réalisation de console conforme à l'invention.

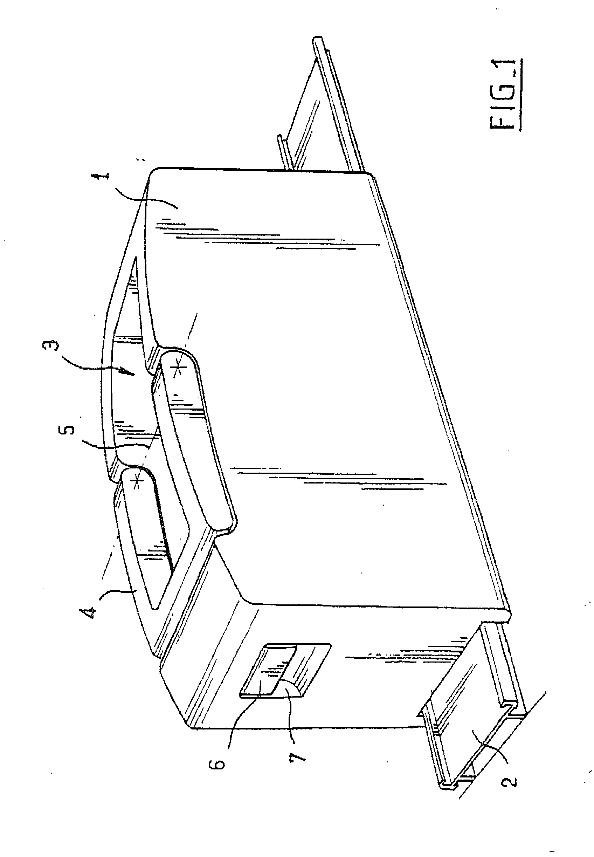

La figure 1 montre en perspective la console avec ses deux organes de commande en position verrouillée,
La figure 2 montre en perspective la console avec l'organe de commande de blocage en position de déverrouillage,
La figure 3 montre en perspective la console avec l'organe de commande d'attachement en position de déverrouillage,
Les figures 4, 5 et 6 montrent les mécanismes intérieurs de la console dans les positions respectives des figures 1, 2 et 3.

La console 1 est un bloc sensiblement parallélépipédique dont la base coulisse sur une glissière 2. Le dessus de la console 1 comporte un évidement de rangement 3 dont les bords logent en partie une poignée 4 pivotant autour d'un axe transversal 5. Cette poignée 4 constitue l'organe de commande d'attachement de la console.

A l'avant et à l'arrière de la console, deux manettes 6, 6' logées dans un évidement 7, constituent l'organe double de commande de blocage de la console sur le rail. Dans la position représentée des organes 4 ou 6, la console 1 est immobilisée en translation sur la glissière 2 et elle ne peut pas être désolidarisée de ladite glissière.

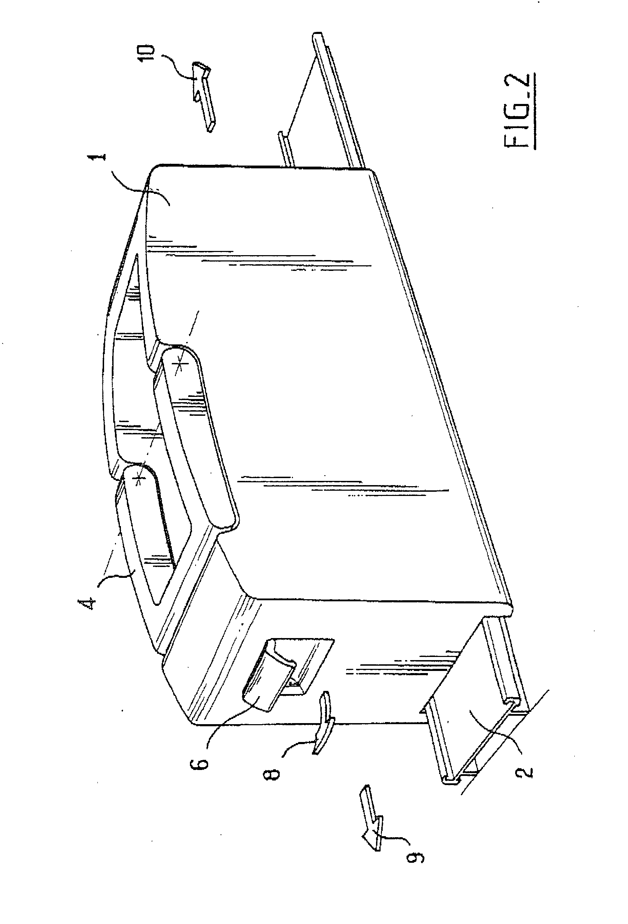

La figure 2 montre que la manette 6 peut être tirée et pivoter comme indiqué par la flèche 8, position dans laquelle le coulissement de la console 1 sur la glissière 2 est possible dans le sens des flèches 9 ou 10.

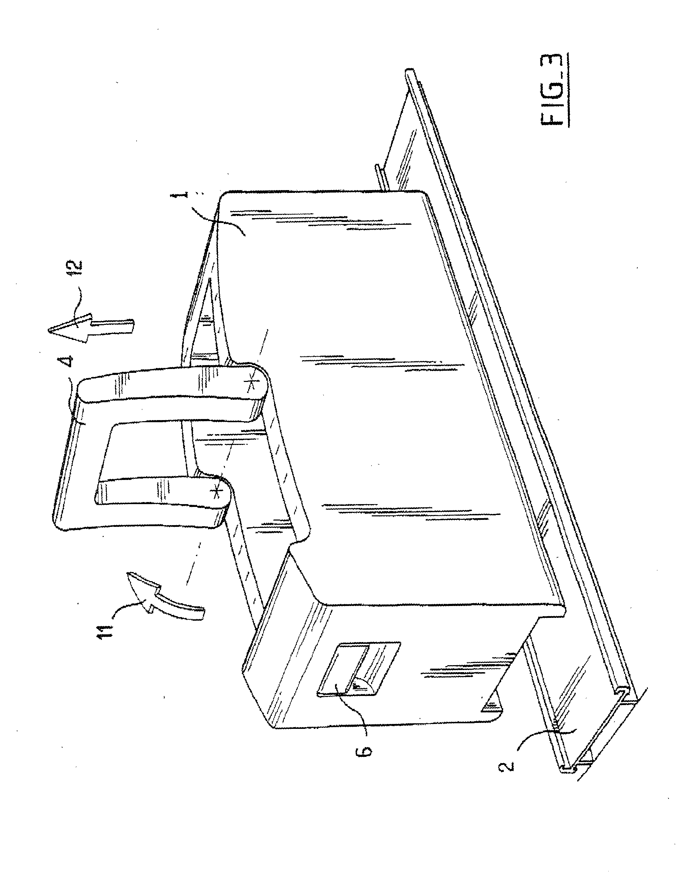

La figure 3 montre la poignée 4 en position pivotée vers le haut selon la flèche 11, ce qui a pour effet de désolidariser la console 1 de la glissière 2 et de permettre de soulever la console vers le haut, selon la flèche 12, en la portant par la poignée 4.

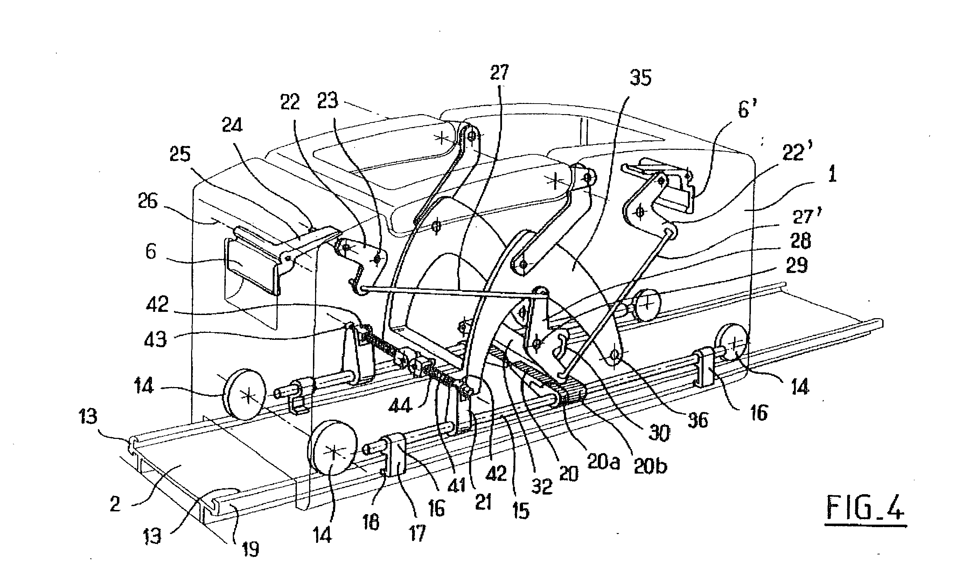

Les mécanismes des différents organes sont visibles sur les figures 4 à 6. La glissière 2 comporte deux rebords longitudinaux ou rails 13 sur lesquels quatre roues 14 de la console peuvent rouler. Deux axes latéraux 15 sont montés en rotation sur la console et portent deux sabots 16 qu'ils peuvent faire pivoter entre trois positions. Les sabots 16 comportent une partie de montage sur l'axe, puis une partie en drapeau 17 terminée par un rebord ou crochet rentrant 18
Dans la position de la figure 4, les sabots 16 pendent verticalement sous l'axe 15, la partie de drapeau longe le bord vertical 19 du rail 13, et la partie en crochet 18 vient sous ce bord 19, le sabot étant engagé avec le rail par frottement ou par des crans non représentés. Dans cette position, la console 1 est empêchée de se déplacer sur les rails 13 et elle ne peut pas non plus être extraite.

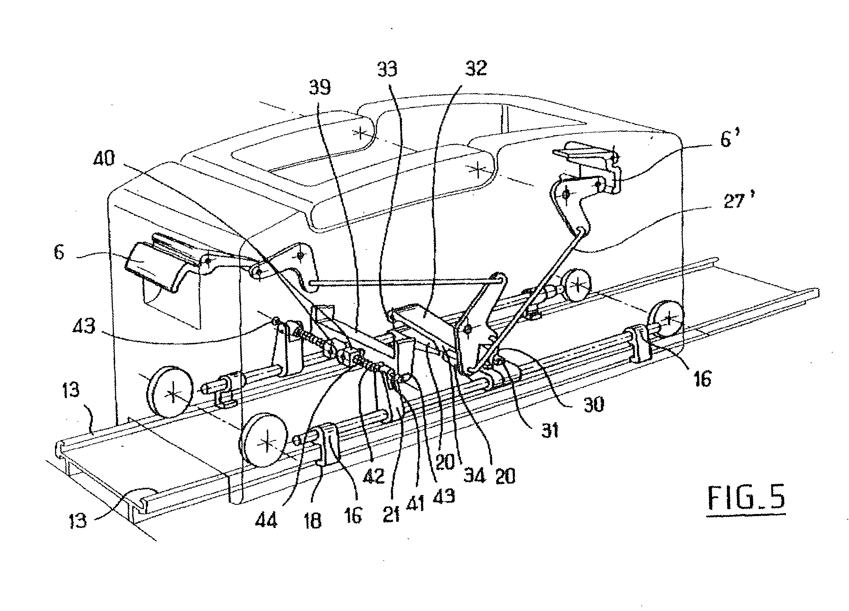

Dans la position de la figure 5, les sabots 16 ont pivoté légèrement pour s'écarter de leur position verticale. Les crans ne sont plus engagés sous le bord 19 et de ce fait, la console peut rouler sur les rails 13. En revanche, les crochets 18 qui ne sont pas complètement écartés empêchent encore qu'on puisse extraire la console 1 de la glissière 2.

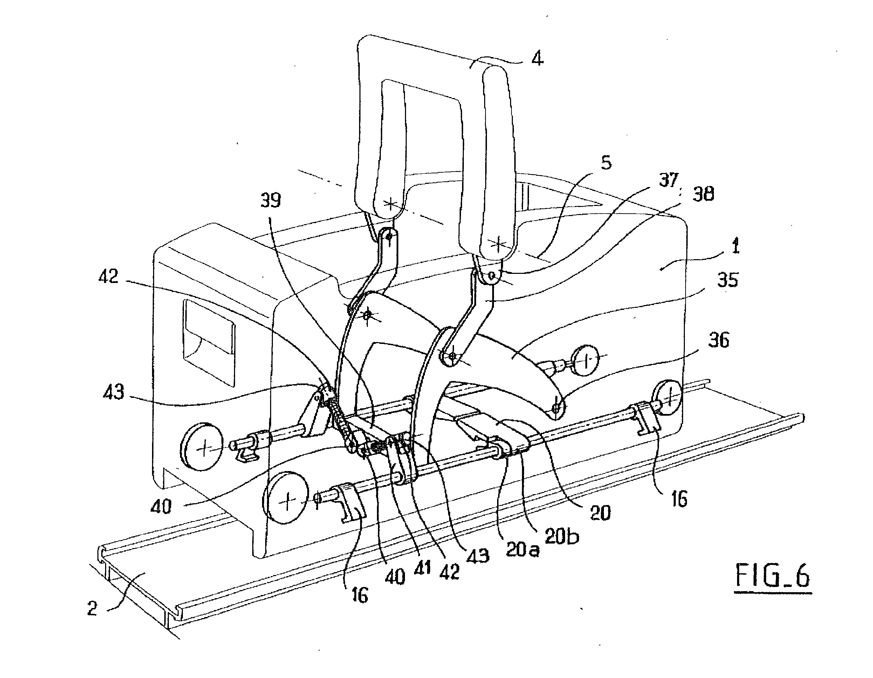

Dans la position de la figure 6, les sabots 16 ont largement pivotés et leurs crochets 18 ne peuvent plus s'opposer à l'extraction de la console 1.

Chaque axe 15 comprend un levier 20 de petit pivotement relié par une première chaîne cinématique à l'organe double 6 de commande du blocage de la console, et un levier de grand pivotement 21 relié par une seconde chaîne cinématique à l'organe 4 de commande d'attachement.

Le première chaîne cinématique comprend un premier levier en équerre du premier genre 22 pivotant sur un axe horizontal 23, dont une branche porte un demi-axe 24 sur lequel appuie un levier 25 lié à la poignée 6., laquelle pivote autour d'un axe 26. L'autre branche du premier levier 22 est reliée par une tringle articulée (à ses extrémités) 27 à une première branche d'un second levier en double équerre du premier genre 28 pivotant autour d'un axe horizontal 29. L'autre branche symétrique du second levier 28 est reliée par une tringle articulée 27' à un second premier levier 22', analogue au levier 22, destiné à la seconde poignée 6'. La branche centrale du second levier 28 est reliée par une tringle courte 30 à l'extrémité 31 d'un levier transversal 32 pivotant sur un axe longitudinal 33. La face inférieure du levier transversal 32 comprend une saillie 34 située au-dessus des deux leviers de petit pivotement 20 qui se font face en formant un arc brisé très obtus dans la position représentée à la figure 4. Lorsque l'une ou l'autre des manettes 6, 6' est tirée, le basculement des leviers 22, 28 entraîne l'enfoncement du levier 32 et donc un léger enfoncement des leviers 20 ce qui provoque l'écartement faible des sabots nécessaire pour permettre la translation de la console mais insuffisant pour permettre son extraction.

La seconde chaîne cinématique comprend un levier principal 35 (doublé parallèlement) en équerre du troisième genre pivotant sur un axe transversal 36. Des oreilles 37 prolongent les bras de la poignée 4 derrière l'axe 5 et des bielles 38 relient de manière articulée ces oreilles au milieu du levier 35, dont l'extrémité libre porte une barre transversale 39 dans deux trous voisins de laquelle tourillonnent des demis-axes portés par des embouts 40. Ces embouts 40 sont fixés à l'extrémité de tiges 41 coulissant dans un palier 42 monté pivotant à l'extrémité des leviers 21. Un bouton terminal 43 sert de butée de fin de course à la tige 41. Un ressort de compression 44 entourant la tige 41 s'appuie d'un côté sur l'embout 40 et de l'autre sur le palier 42.

Lorsque la poignée 4 est soulevée, le jeu des leviers fait s'enfoncer la barre transversale 39 (passage de position de la figure 4 à celle de la figure 6) et donc entraîne les embouts 40 vers le bas ; ceux-ci tirent donc les tiges 41 et leur bouton terminal 43, ce qui a pour effet de faire pivoter les leviers 43 vers le centre de la console d'un angle suffisant pour écarter complètement les sabots 16 des rails 13 et désolidariser la console 1 de la glissière 2.

A l'inverse, quand la poignée 4 est ramenée dans sa position escamotée, la barre transversale 39 se soulève et entraîne les embouts 40 vers le haut. Le ressort 44 repousse le palier 42 et donc le levier 41 de façon qu'il reprenne sa position initiale sensiblement verticale correspondant pour les sabots 16 à leur engagement complet dans les rails 13.

La seconde chaîne cinématique est compatible avec la première chaîne cinématique. Lorsque l'une ou l'autre des poignées 6, 6' est actionnée (passage de la position de la figure 4 à celle de la figure 5), le petit pivotement des leviers 20 entraîne un petit pivotement des leviers 21 qui est rendu possible par le coulissement du palier 42 sur la tige 41, à l'encontre de la force du ressort de compression 44. Cette force de compression permet le retour élastique en position d'origine des leviers 21 et 20 une fois qu'on a ramené la poignée 6, 6' en position escamotée.

Afin de limiter vers le bas le débattement des leviers 20 lorsqu'ils sont entraînés en grand pivotement par le pivotement des leviers 21, chaque levier 20 est réalisé en deux parties complémentaires débrayables 20a, 20b, la partie 20a étant calée sur l'axe 15 et la partie 20b étant libre en rotation sur ledit axe 15, de sorte que le pivotement de l'axe 15 n'entraîne en rotation que la partie courte 20a, tandis que le pivotement de la partie longue 20b sous l'action du levier 32 entraîne la partie 20a et donc l'axe 15 en rotation.

## Revendications

1. Console (1) coulissant sur au moins un rail (13) et comportant un organe de blocage (16) de la translation de la console (1) sur le rail (13), manoeuvrable par un organe (6, 6') de commande de blocage entre une position verrouillée dans laquelle la translation est bloquée et l'extraction de la console est impossible et une position déverrouillée dans laquelle la translation est possible, **caractérisée en ce qu'**elle comporte aussi un organe d'attachement (16) de la console au rail (13), manoeuvrable par un organe (4) de commande d'attachement, différent de l'organe (6, 6') de commande de blocage, entre une position verrouillée d'attachement dans laquelle la console (1) est attachée au rail mais non bloquée en translation et une position déverrouillée de détachement dans laquelle la console (1) est libérée du rail et son extraction est possible.

2. Console selon la revendication 1, **caractérisée en ce que** l'organe (6, 6') de commande de blocage est double et situé à l'avant et à l'arrière de la console (1).

3. Console selon l'une quelconque des revendications 1 ou 2, **caractérisée en ce que** l'organe (4) de commande d'attachement est sur le dessus de la console (1).

4. Console selon la revendication 3, **caractérisée en ce que** l'organe (4) de commande d'attachement est réalisé sous forme d'une poignée pivotante de soulèvement de la console (1).

5. Console selon l'une quelconque des revendications 1 à 3, **caractérisée en ce que** les organes (16) de blocage et d'attachement sont au moins en partie communs et/ou comportent une partie de chaîne cinématique commune.

6. Console selon l'une quelconque des revendications 1 à 4, **caractérisée en ce que** les organes de blocage et d'attachement sont constitués par des sabots pivotants (16) à crochets (18) susceptibles de prendre une position dans laquelle ils s'engagent complètement dans le rail (13), une autre position en partie dégagée du rail (13) dans laquelle ils permettent le coulissement de la console (1) sans en permettre l'extraction et une troisième position complètement dégagée du rail (13) dans laquelle ils permettent l'extraction de la console (1).

7. Console selon le revendication 6, **caractérisée en ce que** les sabots (16) sont portés par au moins un axe longitudinal pivotant (15) sur lequel sont montés un levier de petit pivotement (20) et un levier de grand pivotement (21) reliés respectivement par une première (23, 28, 32) et une seconde (35, 40, 41, 42) chaînes cinématiques à l'organe de commande de blocage (6, 6') et à l'organe de commande d'attachement (4).

8. Console selon la revendication 7, **caractérisée en ce que** la seconde chaîne cinématique (35, 40, 41, 42) comprend des moyens (44), avantageusement élastiques, permettant à la première chaîne cinématique (23, 28, 32) de jouer malgré l'immobilité d'une partie de la seconde chaîne cinématique (35, 40, 41, 42).
